# EUROPEAN PATENT APPLICATION

(11) **EP 4 618 065 A1**
(43) Date of publication of application: **17.09.2025**
(21) Application number: 25161923.5
(22) Date of filing: 05.03.2025
(51) Int. Cl.: G09G 3/00, G06F 3/147, G09G 3/32, G02B 27/01

(54) **MULTIMODE MICRO-LED DISPLAY**

(30) Priority: 12.03.2024 US 202418602783
(71) Applicant: GOOGLE LLC, Mountain View CA 94043 (US)
(72) Inventor: Oskooi, Ardavan, Mountain View, 94043 (US); Hoekman, Thomas Leonard, Mountain View, 94043 (US); Lowney, Joseph Daniel, Mountain View, 94043 (US)
(74) Representative: Maikowski & Ninnemann Patentanwälte Partnerschaft mbB

(57) **Abstract**

A multimode micro-LED display for a head-mounted device which can switch between two or more complimentary display modes having different colors and/or resolutions is disclosed. The modes can help a heads-up display using the micro-LED to display information to a user in a variety of display scenarios without simply increasing the power consumed by the micro-LED. The modes can be supported by display software and display hardware. Switching between the alternative modes can be based on the content for display, a user input, an environmental condition, and/or a condition of a head mounted device.

## Description

### FIELD OF THE DISCLOSURE

The present disclosure relates to a display and more specifically to a micro-LED display.

### BACKGROUND

A head-worn (i.e., head-mounted) device may be worn by a user to view information about the environment displayed in a convenient way. The head-mounted device may be powered by a rechargeable battery.

### SUMMARY

The display of a head-mounted device can consume excessive power to display high resolution color images at full brightness. This excessive power consumption can limit the operating time of the head-mounted device for a single charge. The present disclosure describes a display for a head-mounted device that can automatically change how content is displayed so that the power consumed by the display can be reduced on average.

In some aspects, the techniques described herein relate to a micro-LED display for a head-mounted device, the micro-LED display including: a two-dimensional array of pixels subdivided into a plurality of areas, the plurality of areas configured to display content according to at least one mode of the micro-LED display; and a controller configured to: determine a mode of the at least one mode of the micro-LED display based on a criterion; select an area of the plurality of areas to display the content based on the mode; and display the content on the area of the plurality of areas.

In some aspects, the techniques described herein relate to a head-mounted device including: a sensor configured to sense a condition of the head-mounted device; a micro-LED display subdivided into contiguous areas, the contiguous areas including: a first area at a center of the micro-LED display, the first area having an upper border that is above the center, a lower border below that is below the center, a left border that is left of the center, and a right border that is right of the center, wherein the first area includes three different color subpixels; and a reduced-color area extending from the upper border to a top edge of the micro-LED display, extending from the lower border to a bottom edge of the micro-LED display, extending from the right border to a right edge of the micro-LED display, and extending from the left border to a left edge of the micro-LED display, wherein the reduced-color area includes less than three different color subpixels; and a processor communicatively coupled to the sensor and the micro-LED display, the processor configured by software instructions to: select a mode from a plurality of modes of the micro-LED display based on the condition of the head-mounted device; and configure the micro-LED display to display content in the first area and the reduced-color area based on the mode.

In some aspects, the techniques described herein relate to a method including: receiving content for display on a micro-LED display; selecting a mode of the micro-LED display from a plurality of modes based on the content; and driving different areas of the micro-LED display differently based on the mode, the different areas including: a first area at a center of the micro-LED display that includes three different color subpixels spaced at a first pixel pitch; and a second area surrounding the first area that includes less than three different color subpixels spaced at a second pixel pitch, the second pixel pitch larger than the first pixel pitch.

The foregoing illustrative summary, as well as other exemplary objectives and/or advantages of the disclosure, and the manner in which the same are accomplished, are further explained within the following detailed description and its accompanying drawings.

### BRIEF DESCRIPTION OF THE DRAWINGS

FIG. 1 is a front view of a head-mounted device including a multimode micro-LED display according to a possible implementation of the present disclosure.
FIG. 2 is an eye-side view of content displayed on a head-mounted device according to a first possible implementation of the present disclosure.
FIG. 3 is an eye-side view of content displayed on a head-mounted device according to a second possible implementation of the present disclosure.
FIG. 4 is a schematic block diagram of a micro-LED display for a head-mounted device according to a possible implementation of the present disclosure.
FIG. 5 is a block diagram of a heads-up display for a head-mounted device according to a possible implementation of the present disclosure.
FIG. 6 illustrates a micro-LED display configured for multiple display modes according to a first possible implementation of the present disclosure.
FIG. 7 illustrates a micro-LED display configured for multiple display modes according to a second possible implementation of the present disclosure.
FIG. 8 is a system block diagram of a head-mounted device according to a possible implementation of the present disclosure.
FIG. 9 is a flow chart of a method for displaying content on a multimode micro-LED display according to a possible implementation of the present disclosure.
FIG. 10 illustrates a top view of a pixel for displaying content in full-color according to a possible implementation of the present disclosure.
FIGS. 11A-11B illustrate a top view of possible pixels for displaying content one-color (green) according to a possible implementation of the present disclosure.

The components in the drawings are not necessarily to scale relative to each other. Like reference numerals designate corresponding parts throughout the several views.

### DETAILED DESCRIPTION

A head-mounted device may utilize a micro-LED display panel (i.e., display) in a display subassembly (DSA). The micro-LED display includes a two-dimensional array of pixels. Each pixel may correspond to a micro-LED configured to radiate light in a red, green, or blue color channel in order to generate a full-color image.

One technical problem facing micro-LED displays is variability between pixels. The intensity of each micro-LED may correspond to its wall-plug efficiency (i.e., WPE), which can vary based on the color of the micro-LED. In a micro-LED display configured to generate full-color images (e.g., white light), the WPE of the pixels may vary by twenty percent or more. The pixels with the smallest WPE (e.g., red pixels) may limit the intensity used by the other color channels (e.g., blue, green) in order to color balance the micro-LED display. To color balance the display, the brightest pixels (e.g., blue pixels) may be dimmed to improve white point and uniformity of a calibration image at the time of fabrication. This dimming can limit the maximum brightness level for the display when power resources are limited, as with a battery operated head-mounted device. Viewing content in full sunlight may be challenging when the maximum brightness is limited by color balance and power consumption constraints.

The present disclosure describes a micro-LED display for a head-mounted device that can address at least these technical problems. The micro-LED display is configured to display content in a mode selected from a plurality of possible modes in order to optimize viewing. The modes may vary in their color, size, position, and/or resolution, and the mode selection can be based on criteria related to the displayed content (e.g., color content of a frame for display), the operation of the device, and/or environmental conditions. This multi-mode approach may have at least the technical effect of increasing an operating time (i.e., battery life) of the head-mounted device, without negatively affecting the ability of a user to see and understand the displayed content.

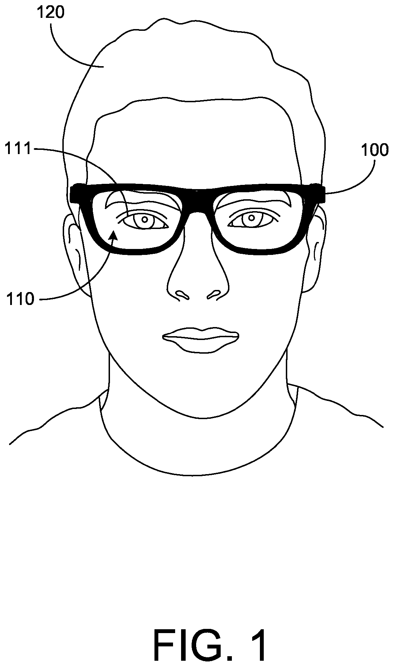

FIG. 1 is a front view of a head-mounted device including a multimode micro-LED display according to a possible implementation of the present disclosure. As shown, the head-mounted device 100 may be implemented as smart glasses. In a possible implementation, the smart glasses may be configured to display content on a lens 110 (or lenses) of the smart glasses so that a user 120 can view the content at the same time that the user 120 views an environment. The content may be augmented reality (AR) content displayed at a time, location, and orientation on the lens 110 (or lenses) in order enhance the perception/understanding of the environment of the user 120.

The lens 110 of the head-mounted device 100 may be part of a heads-up display (HUD). The HUD may be configured to project light from a micro-LED display into an eye 111 (or eyes) of the user 120 so that an image of the micro-LED display is formed on the retina (or retinas) of the user. In other words, content (e.g., text, images, graphics, etc.) viewed by the user 120 wearing the head-mounted device 100 may be a replica of the content displayed on a micro-LED included in the head-mounted device 100.

The head-mounted device 100 may be optimally operated wirelessly and therefore includes a rechargeable battery as a power source. The available energy from the rechargeable battery may be constrained by weight and size constraints of the head-mounted device 100. As a result, a reduction in the amount of power the HUD consumes may correspond to a reduction in the rechargeable battery (e.g., size, storage, etc.).

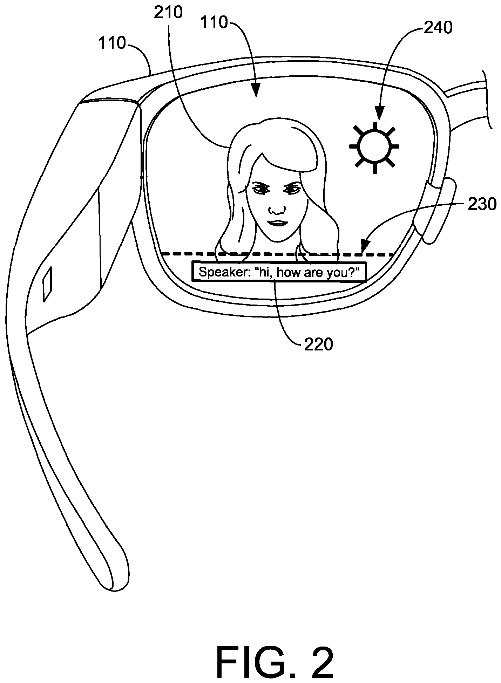

FIG. 2 is an eye-side view of content displayed on a head-mounted device 100 according to a first possible implementation of the present disclosure. In this implementation, a transcription application running on the head-mounted device 100 may be configured to convert speech to text and display the speech-to-text 220 on the lens 110 so that a user 120 may view both the speaker 210 and the speech-to-text 220. In a possible implementation the speech-to-text 220 is a translation of the speech from a first language spoken by the speaker 210 into a second language understood by the user 120. The speech-to-text 220 may be displayed at a position regardless of the position of the head-mounted device 100. Accordingly, this content may be referred to as head-locked content. The head-locked content may be displayed on a portion of the lens 110 that is in the periphery of a field-of-view of the user 120. As shown, in FIG. 2, the speech-to-text 220 may be viewed in a bottom portion 230 of the lens 110, which may correspond to the speech-to-text 220 being displayed in a bottom portion 230 of the micro-LED display (not shown).

The speech-to-text 220 may be displayed using less than three color channels (i.e., reduced color) without a loss of understanding. For example, the speech-to-text 220 may be displayed in green. The speech-to-text 220 may be displayed using less resolution than other content (e.g., images) without a loss of quality. This may be in part due to its position in the periphery of the view of the user 120. The reduction of color and resolution may correspond to an increase in the brightness of the speech-to-text 220 per unit power. In other words, reducing color content and/or resolution may correspond to an increase in brightness without requiring the micro-LED to consume additional power. The increased brightness may improve the visibility of content that is displayed in bright ambient conditions. As shown in FIG. 2, a reduction of visibility created by the ambient lighting 240 may be compensated for by a display mode having increased brightness based on color and/or resolution. For example, the display mode may configure the micro-LED display to display the content (i.e., the speech-to-text 220) in a reduced-color area of the micro-LED display, which in this case, corresponds to the bottom portion 230 of the lens 110.

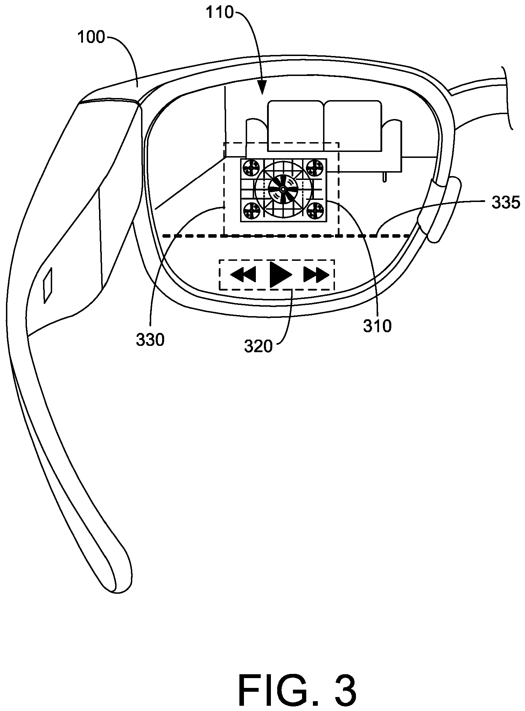

FIG. 3 is an eye-side view of content displayed on a head-mounted device according to a second possible implementation of the present disclosure. In this implementation, an application (e.g., video viewer) running on the head-mounted device 100 may be configured to display a video 310 to the user. In a possible implementation the application running on the head-mounted device 100 may be further configured to display a user-interface 320 to control the video 310.

As shown in FIG. 3, a location, color, and resolution of the displayed information may be based on the type of content. For example, the video 310 may be analyzed and determined to be content of a first type (i.e., video/picture type) and the user-interface 320 may be analyzed and determined to be content of a second type (i.e., text/icon type).

The content of the first type may trigger a first mode for rendering and driving the micro-LED display of the HUD. The first mode for rendering and driving the display may include utilizing a first pixel area (i.e., first area) of a two-dimensional array of pixels of the display, which may correspond to the video 310 being presented in a first portion 330 of the lens 110. In a possible implementation, the first pixel area may include pixels (i.e. micro-LEDs) corresponding to three color channels (i.e., red, green, blue) to display content in full-color. In a possible implementation, the first pixel area may have a display area (i.e., field-of-view) that is less than the overall display area of the micro-LED display. In a possible implementation, the first pixel area may include a center portion of the micro-LED display so that the video 310 can be viewed at, or near, the center of the user's view. In a possible implementation, the first pixel area may have a higher pixel resolution (i.e., smaller pixel pitch) than other areas of the micro-LED display. For example, the first pixel area may have the highest pixel resolution of the micro-LED display because it is viewed at, or near, a center of the user's view.

The content of the second type may trigger a second mode for rendering and driving the micro-LED display of the HUD. The second mode for rendering and driving the display may include utilizing a second pixel area (i.e., second area) of the two-dimensional array of pixels of the display, which may correspond to the user-interface 320 being presented in a second portion 335 of the lens 110. In a possible implementation, the second pixel area may include pixels (i.e. micro-LEDs) corresponding to one color channel (e.g., green) to display content in mono-color. In a possible implementation, the second pixel area may have a display area (i.e., field-of-view) that is less than the overall display area of the micro-LED display but larger than the first pixel area. In a possible implementation, the second pixel area may include a bottom portion of the micro-LED display so that the user-interface 320 can be viewed at, or near, the bottom of the user's view. In a possible implementation, the second pixel area may have a lower pixel resolution (i.e., larger pixel pitch) than other areas of the micro-LED display (e.g., the first pixel area). For example, the second pixel area may have the lowest pixel resolution of the micro-LED display because it is viewed at, or near, a user's periphery view.

Displaying content in full-color and high-resolution may consume more power than displaying content in mono-color and low-resolution. Accordingly, the first area may be kept smaller than the second area in order to conserve an amount of power for displaying the video 310. As previously mentioned, the brightness of the full-color display may be limited by color balancing. Accordingly, a first brightness of the user-interface 320 may be controlled to be less than or equal to a brightness of the video 310. This may further reduce the power consumed by the micro-LED display. In other words, even when ambient light conditions do not require high brightness for viewing, the modes of the micro-LED display may still provide a reduction in power consumption.

As shown in FIG. 3 it may be possible to display the modes simultaneously. This may be true when the ambient conditions are suitable, such as with the indoor situation shown. Accordingly, the selection of the mode (or modes) may be based on criteria related to a variety of display parameters. In one possible implementation, the selection may be based on display parameters related to content (i.e., content display parameters). For example, a mode-selection criterion may include comparing an amount of color content to a threshold. In another possible implementation, the selection may be based on display parameters related to the environment (i.e., environment display parameters). For example, a mode-selection criterion may include comparing an ambient light level (i.e., brightness) to a threshold. In another possible implementation, the selection may be based on display parameters related to the device. For example, a mode-selection criterion may include comparing a power level of a battery of the head-mounted device to a threshold. Alternatively, the mode-selection criterion may include comparing a temperature of the head-mounted device (e.g., micro-LED display) to a threshold.

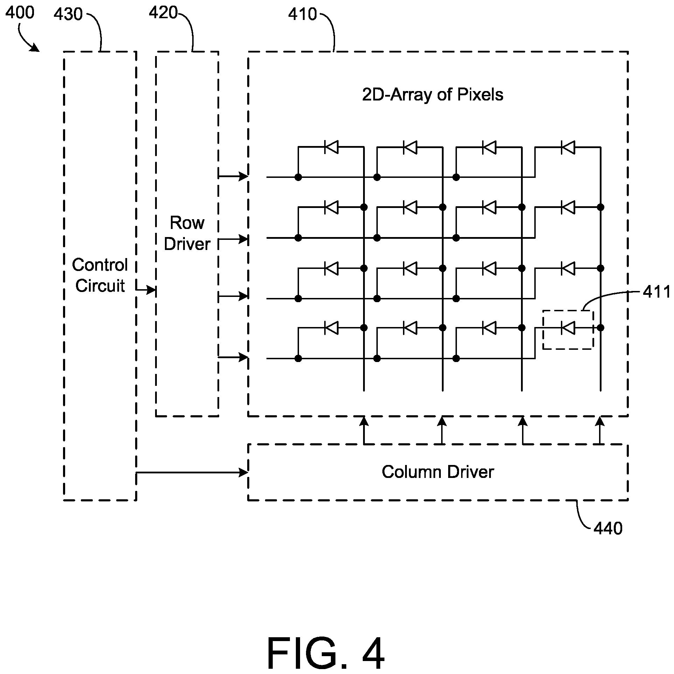

FIG. 4 is a schematic block diagram of a micro-LED display for a head-mounted device according to a possible implementation of the present disclosure. The micro-LED display 400 includes a two-dimensional array 410 of pixels. To generate color, each pixel may include subpixels driven collectively to form a color. Each pixel of the two-dimensional array 410 of pixels includes at least one micro-LED 411 subpixel configured to generate light. Each micro-LED 411 can be driven to generate light in wavelength ranges of the visible spectrum. For example, red light (i.e., red) can be in any portion of a first wavelength range of about 620 nanometers (nm) to 750nm; green light (i.e., green) can be in any portion of a second wavelength range of about 500 nm to 570nm; blue light (i.e., blue) can be in any portion of a third wavelength range of about 450nm and 500nm, yellow light (i.e., yellow) can be in any portion of a fourth wavelength range of about 570nm to 580nm; and cyan light (i.e., cyan) can be in any portion of a fifth wavelength range of about 490nm to 520nm,

The red, green, and blue micro-LEDs may be arranged together (e.g., adjacent) in a pixel area as subpixels so that they can be driven simultaneously to generate white light in the pixel. By adjusting the intensities of the red, green, and/or blue subpixels any color in the visible spectrum may be generated in the pixel area.

Driving a micro-LED can include a column driver 440 generating a first signal on a column line coupled to a first terminal of the micro-LED and a row driver 420 generating a second signal on a row line coupled to a second terminal of the micro-LED. The column driver 440 and the row driver 420 can be controlled to drive the pixels according to rows and columns by a controller 430 (i.e., control circuit).

In a first possible implementation, the pixels in the two-dimensional array 410 may be sized similarly (e.g., identically) and may be spaced uniformly. In this implementation, the pixel areas (i.e., areas) of the two-dimensional array 410 may be driven differently according to the display mode (i.e., mode) for each area. For example, only green subpixels in an area including red, green, and blue pixels may be driven (i.e., active) in a mono-color (i.e., green) mode.

In a second possible implementation, the pixels in the two-dimensional array 410 may be sized differently and/or may be spaced differently in each area. In this implementation, the color, size, and/or arrangement of the pixels may be based on a display mode (i.e., mode) for each area. For example, all pixels in an area including only green subpixels may be driven in a mono-color (i.e., green mode). In other words, pixels in an area configured to display a particular color may include one subpixel of the particular color, or may include multiple subpixels but only actively drive the subpixels of the particular color. Accordingly, when the disclosure refers to an area that includes only green pixels it can mean (i) the pixels in the area each have three (RGB) subpixels with only the green pixel illuminated or (ii) the pixels in the area each only have a green subpixel, which is illuminated.

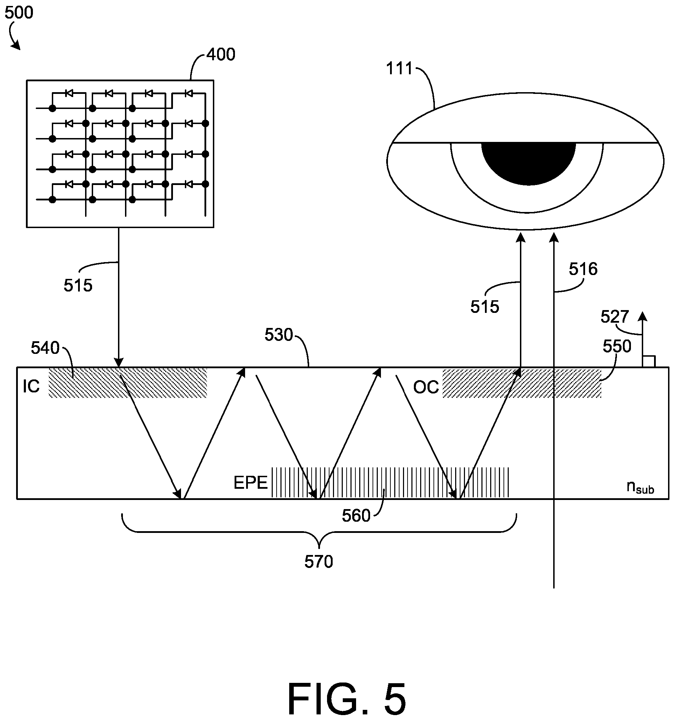

FIG. 5 is a block diagram of a heads-up display (i.e., HUD) for a head-mounted device according to a possible implementation of the present disclosure. The HUD 500 includes a micro-LED display 400. The micro-LED display 400 is the source of light 515 in the HUD 500. The micro-LED display 400 can be configured to generate images (e.g., text, video, photos, graphics, etc.). The HUD 500 further includes a diffractive waveguide combiner 530 that can be configured to receive light 515 from the micro-LED display 400. The diffractive waveguide combiner 530 can be further configured to convey (i.e., guide) the light 515 from the micro-LED display 400 along a guided portion 570 of the waveguide based on total internal reflection. Accordingly, the diffractive waveguide combiner 530 may be a material (e.g., glass) having an index of refraction (e.g., 1.5-2.7) and a dimension (e.g., 550 µm ≤ thickness ≤ 10 mm) suitable for total internal reflection of visible wavelengths (e.g., 400nm ≤ λₒ ≤ 700nm). The diffractive waveguide combiner 530 can be further configured to output the light 515 to an eye 111 of a user. Accordingly, the diffractive waveguide combiner 530 may be positioned in front of the eye 111 of the user and may be transparent at the visible wavelengths so that the user can see images from the micro-LED display 400 superimposed on the user's view of light 516 from the environment through the diffractive waveguide combiner 530.

The diffractive waveguide combiner 530 may utilize one or more optical gratings (i.e., gratings) to achieve the function described above. Each of the gratings may exist over a grating area in the waveguide. The gratings may be configured to redirect the light 515 from the micro-LED display 400 along certain angles. For example, the diffractive waveguide combiner 530 may include an IC grating 540 to redirect the light 515 from the micro-LED display 400 from a first angle (e.g., aligned with a surface-normal vector 527) to a second angle that is greater than a critical angle for total internal reflection at an interface between the diffractive waveguide combiner 530 and the environment (e.g., air). The diffractive waveguide combiner 530 may further include an EPE grating 560 disposed in the guided portion 570 of the diffractive waveguide combiner 530. The EPE grating 560 may be configured to process the light to make viewing the images easier. For example, the EPE grating may be configured to expand the exit pupil of the diffractive waveguide combiner 530 so that the display images can be viewed over a range of viewing angles of the eye 111. The diffractive waveguide combiner 530 may further include an OC grating 550 configured to redirect the guided light from the second angle greater than the critical angle for TIR to a third angle that is less than the critical angle for TIR so that the light 515 exits the diffractive waveguide combiner 530. For example, the projected light exiting the waveguide may be normal to a surface of the diffractive waveguide combiner 530 (i.e., aligned with a surface-normal vector 527) and in a direction towards an eye 111 of the user so that when focused by the eye 111 an image of the display is focused on the retina of the user. The focused image can closely match the displayed image on the micro-LED display 400.

While the HUD 500 of FIG. 5 may be configured for monochromatic light, the principles described for this monochromatic system may be adapted to accommodate color (i.e., RGB) light. For example, one or more channels (i.e., red (R), green (G), blue (B)) of light from the micro-LED display 400 may be processed (e.g., routed) by different spatial areas of the gratings. In other words, the gratings and waveguide of the HUD 500 may be another reason why the full-color mode (e.g., polychrome mode) has a smaller field-of-view than the reduced color mode (e.g., monochrome mode). For example, the field of view of a monochromatic mode may correspond to the refractive index of the waveguide of the HUD.

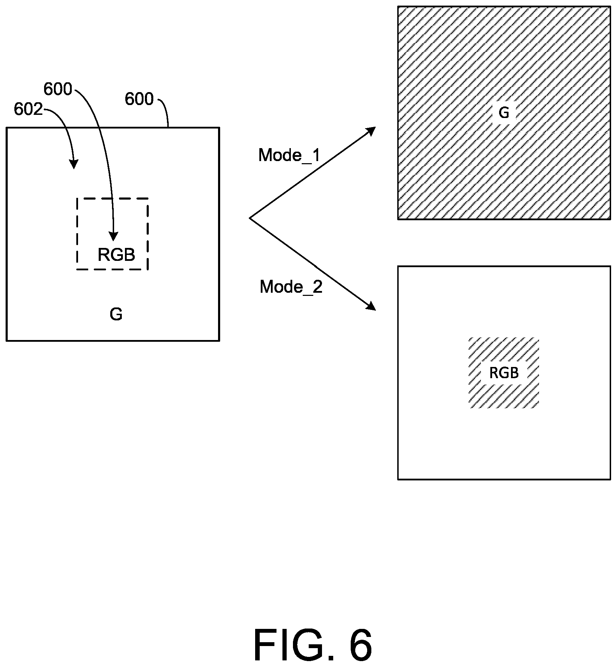

FIG. 6 illustrates a micro-LED display configured for multiple display modes according to a first possible implementation of the present disclosure. The micro-LED display 600 may be subdivided into contiguous areas including a first area 601 and a second area 602. In a possible implementation, the first area 601 is centered at a center of the micro-LED display 600. The first area 601 (i.e., full-color area) has an upper border that is above the center, a lower border below that is below the center, a left border that is left of the center, and a right border that is right of the center. The first area 601 includes three different color subpixels (e.g., RGB). The second area 602 (i.e., reduced-color area) extends from the upper border of the first area 601 to a top edge of the micro-LED display. The second area 602 further extends from the lower border of the first area 601 to a bottom edge of the micro-LED display. The second area 602 further extends from the right border of the first area 601 to a right edge of the micro-LED display. The second area 602 further extends from the left border to a left edge of the micro-LED display. The second area 602 can be reduced-color area includes less than three different color subpixels (e.g., G).

As shown in FIG. 6, a first mode (MODE_1) has relatively high WPE, a relatively large field-of-view, and is monochromatic. A second mode (MODE_2) has a relatively low WPE, a relatively small field-of-view, and is polychromatic. The two display modes are implemented directly within the two-dimensional array of micro-LEDs.

The selection of which of the two display modes (or both) can be determined automatically (e.g., in real time) by a processor configured by software instructions. The processor may receive inputs from various sensors to facilitate the selection. The software may include selection criteria for a particular mode based on such things as: the display content; the ambient lighting conditions, and/or a device state (e.g., temperature, battery status).

The first mode (i.e., green-color mode) may be selected instead of the second mode (i.e., full-color mode) in situations in which the full color spectrum of the display is not be suitable for the content being shown or is less perceptible given ambient lighting conditions. For example, the first mode (MODE_1) may be used for display scenarios including static content (e.g., text notifications) and/or when the user is outside during a sunny day or viewing the bright headlights of an approaching vehicle when driving at night. Alternatively, the second mode (MODE_2) may be used for display scenarios including interactive content such as animations and games.

A HUD (i.e., display subassembly) which can support multiple modes and yet operate in the high WPE mode for the majority of the time that the head-mounted device is in operation can provide significant improvements in WPE compared to a display which only (i.e., always) shows RGB images.

The multimode concept can be extended to support additional modes. For example, in addition to the two modes described above the micro-LED display may be configured to render and display in a third mode (MODE_3) with a rectangular field-of-view (e.g., biased towards a nose bridge on a lens of smart glasses) that includes two color channels (e.g., RG, yellow) and in a fourth mode (MODE_4) with a rectangular field-of-view (e.g., biased way from a nose bridge on a lens of smart glasses) that includes two color channels (e.g., GB, cyan).

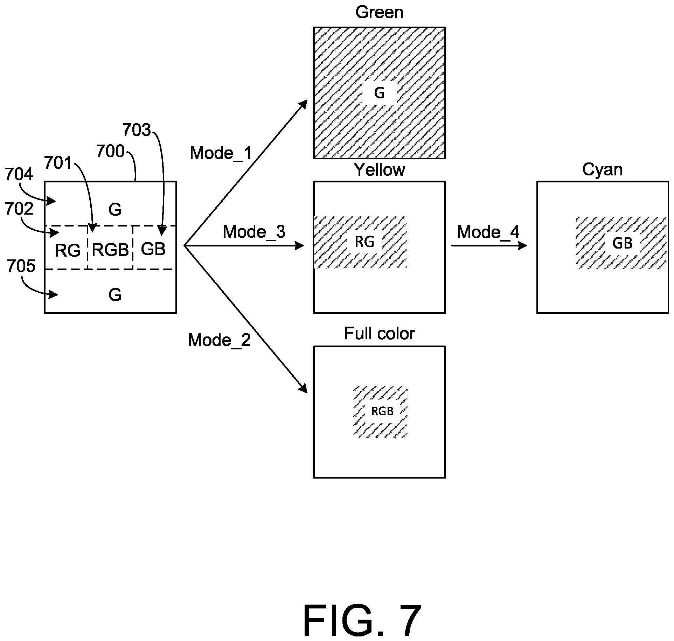

FIG. 7 illustrates a micro-LED display configured for multiple display modes according to a second possible implementation of the present disclosure. The micro-LED display 700 may be subdivided into contiguous areas including a first area 701, a second area 702, a third area 703, a fourth area 704, and a fifth area 705.

The first area 701 is a full-color area and includes red pixels, blue pixels, and green pixels. The first area 701 is centered at a center of the micro-LED display. The first area 701 has an upper border that is above the center, a lower border below that is below the center, a left border that is left of the center, and a right border that is right of the center. The first area 701 includes three different color pixels.

A reduced-color area includes, a second area 702, a third area 703, a fourth area 704, and a fifth area 705. The second area 702 extends vertically from the lower border to the upper border and extends horizontally from the left edge of the micro-LED display to the left border of the first area. The second area 702 includes only red pixels and green pixels. The third area 703 extends vertically from the lower border to the upper border and extends horizontally from the right border of the first area to the right edge of the micro-LED display. The third area 703 includes only green pixels and blue pixels. A fourth area 704 extends vertically from the upper border to the top edge of the micro-LED display and extends horizontally from the left edge of the micro-LED display to the right edge of the micro-LED display. The fourth area 704 includes only green pixels. A fifth area 705 extends vertically from the bottom edge of the micro-LED display to the lower border and extends horizontally from the left edge of the micro-LED display to the right edge of the micro-LED display. The fifth area 705 includes only green pixels.

In addition to the green-color mode (i.e., MODE_1) and the full-color mode (i.e., MODE_2) described previously, the micro-LED display 700 may be configured in a yellow-color mode (i.e., MODE_3) or a cyan-color mode (i.e., MODE_4). In other words, the display may be configured in a polychromatic mode that includes only two color channels.

In the yellow-color mode red and green pixels of the second area 702 and the first area 701 may be active in the micro-LED display 700. In a possible implementation, only the red and green pixels of the second area 702 and the first area 701 are active in the micro-LED display 700 during the yellow-color mode (i.e., MODE_3), and content may be displayed anywhere in a combined area of the first area 701 and second area 702.

In the cyan-color mode green and blue pixels of the third area 703 and the first area 701 may be active in the micro-LED display 700. In a possible implementation, only the red and green pixels of the third area 703 and the first area 701 are active in the micro-LED display 700 during the cyan-color mode (i.e., MODE_4), and content may be displayed anywhere in a combined area of the first area 701 and third area 703.

In a possible implementation, the selection of a color mode (i.e., green, yellow, cyan) may be based on a contrast with the environment viewed by a user. For example, a green mode may not be selected when the user is viewing a predominately green environment. The environment color may be determined by analyzing images of the environment captured by a camera of the head-mounted device.

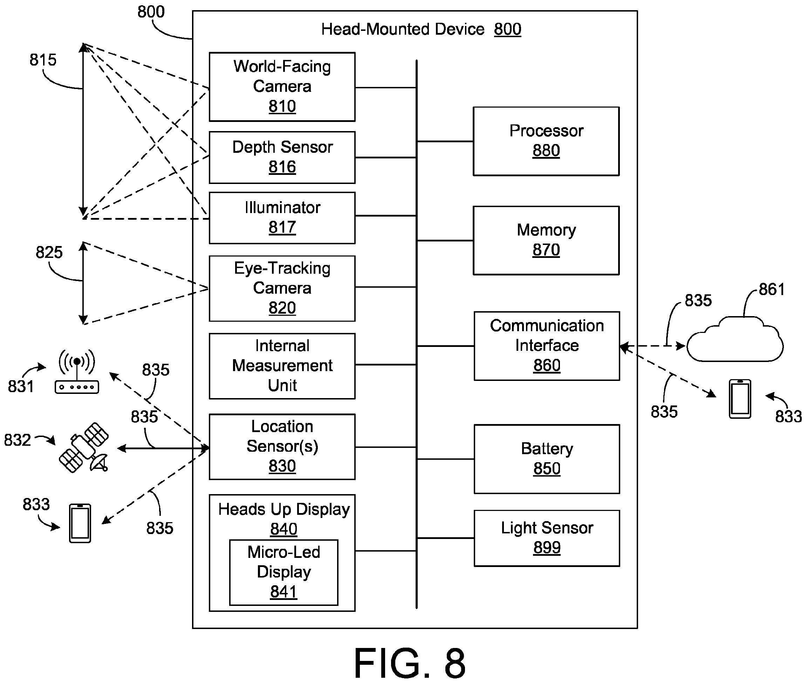

FIG. 8 is a system block diagram of a head-mounted device according to a possible implementation of the present disclosure. As mentioned, the head-mounted device 800 (i.e., head-worn device) may be implemented as smart glasses worn by a user. In a possible implementation, the smart glasses may provide a user with (and enable a user to interact with) an augmented reality (AR) environment. In these implementations, the smart glasses may be referred to as AR glasses. While AR glasses are not the only possible head-mounted device that can be implemented using the disclosed systems and methods (e.g., virtual reality headset), the disclosure may refer to the AR glasses implementation as the head-mounted device throughout the disclosure.

The head-mounted device 800 may be worn on the head of a user (i.e., wearer) and can be configured to monitor a position and orientation (i.e., pose) of the head of the user. Additionally, the head-mounted device 800 may be configured to monitor the environment of the user. The head-mounted device may be further configured to determine a frame coordinate system based on the pose of the user and a world coordinate system based on the environment of the user. The relationship between the frame coordinate system and the world coordinate system may be used to visually anchor digital objects to real objects in the environment. The digital objects may be displayed to a user in a heads-up display 840. The heads-up display 840 may include a micro-LED display 841 that is configurable into multiple modes for display. For these functions the head-mounted device 800 may include a variety of sensors and subsystems.

The head-mounted device 800 may include a world-facing camera 810. The world-facing camera (i.e., front-facing camera) may be configured to capture images of a front field-of-view 815. The front field-of-view 815 may be aligned with a user's field of view so that the front-facing camera captures images from a point-of-view of the user. The camera may be a color camera based on a charge coupled device (CCD) or complementary metal oxide semiconductor (CMOS) sensor.

The head-mounted device 800 may further include an eye-tracking camera 820 (or cameras). The eye tracking camera may be configured to capture images of an eye field-of-view 825. The eye field-of-view 825 may be aligned with an eye of the user so that the eye-tracking camera 820 captures images of the user's eye. The eye images may be analyzed to determine a gaze direction of a user, which may be included in analysis to refine the frame coordinate system to better align with a direction in which the user is looking. When the head-mounted device 800 is implemented as smart glasses, the eye-tracking camera 820 may be integrated with a portion of a frame of the glasses surrounding a lens to directly image the eye. In a possible implementation the head-mounted device 800 includes an eye-tracking camera 820 for each eye and a gaze direction may be based on the images of both eyes.

The head-mounted device 800 may further include a depth sensor 816 (i.e., range detector) configured to measure a range of objects in (at least) the front field-of-view 815 and an illuminator 817 configured to transmit light (e.g., near infra-red light) into (at least) the front field-of-view 815 to aid function of the world-facing camera 810 and/or the depth sensor 816.

The head-mounted device 800 may further include location sensors 830. The location sensors may be configured to determine a position of the head-mounted device (i.e., the user) on the planet, in a building (or other designated area), or relative to another device. For this, the head-mounted device 800 may communicate with other devices over a wireless communication link 835. For example, a user's position may be determined within a building based on communication between the head-mounted device 800 and a wireless router 831 or indoor positioning unit. In another example, a user's position may be determined on the planet based on a global positioning system (GPS) link between the head-mounted device 800 and a GPS satellite 832 (e.g., a plurality of GPS satellites). In another example, a user's position may be determined relative to a device (e.g., mobile phone 833) based on ultra-wide band (UWB) communication or Bluetooth communication between the mobile phone 833 and the location sensors 830.

The head-mounted device 800 may further include a heads-up display 840 (i.e., HUD) displayed on a portion (e.g., the entire portion) of a lens (or lenses) of the head-mounted device 800 (e.g., AR glasses, AR goggles). In a possible implementation, a micro-LED display 841 positioned in a frame arm of AR glasses may project light to a grating/waveguide assembly, where it is directed to an eye of the user. In another possible implementation, the head-mounted device 800 may include a heads-up display for each eye.

The head-mounted device 800 may further include a battery 850. The battery may be configured to provide energy to the subsystems, modules, and devices of the head-mounted device 800 to enable their operation. The battery may be rechargeable and have an operating life (e.g., lifetime) between charges. The head-mounted device 800 may include circuitry or software to monitor a battery level of the battery 850.

The head-mounted device 800 may further include a communication interface 860. The communication interface may be configured to communicate information digitally over a wireless communication link (e.g., WiFi, Bluetooth, etc.). For example, the head-mounted device 800 may be communicatively coupled to a network 861 (i.e., the cloud) or a device (e.g., the mobile phone 833) over a wireless communication link 835. The wireless communication link may allow operations of a computer-implemented method to be divided between devices (i.e., split-processing). Additionally, the communication link may allow a device to communicate a condition, such as a battery level or a power mode (e.g., low-power mode). In this regard, devices communicatively coupled to the head-mounted device 800 may be considered as accessories to the head-mounted device 800 and therefore each may be referred to as an accessory device. In a possible implementation, an accessory device (e.g., mobile phone 833, tablet) may be configured to aid or perform the processing associated with the disclosed methods.

The head-mounted device 800 may further include a memory 870. The memory may be a non-transitory computer readable medium (i.e., CRM). The memory may be configured to store a computer program product. The computer program can instruct a processor to perform computer implemented methods (i.e., computer programs). These computer programs (also known as modules, programs, software, software applications or code) include machine instructions for a programmable processor and can be implemented in a high-level procedural and/or object-oriented programming language, and/or in assembly/machine language. As used herein, the terms "machine-readable medium" or "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

The head-mounted device 800 may further include a processor 880. The processor may be configured to carry out instructions (e.g., software, applications, etc.) to configure the functions of the head-mounted device 800. In a possible implementation the processor may include multiple processor cores. In a possible implementation, the head-mounted computing device may include multiple processors. In a possible implementation, processing for the head-mounted computing device may be carried out over a network 861.

The head-mounted device 800 may further include an inertial measurement unit (IMU 890). The IMU may include a plurality of sensor modules to determine its position, orientation, and/or movement. The IMU may have a frame coordinate system (X,Y,Z) and each sensor module may output values relative to each direction of the frame coordinate system.

The head-mounted device 800 may further include a light sensor 899 configured to measure an ambient light level. In a possible implementation the light sensor 899 output may trigger a brightness condition when the measured ambient light is at or above a brightness threshold. In a possible implementation, the brightness condition can trigger the head-mounted device to display content in a mode viewable in the brightness condition.

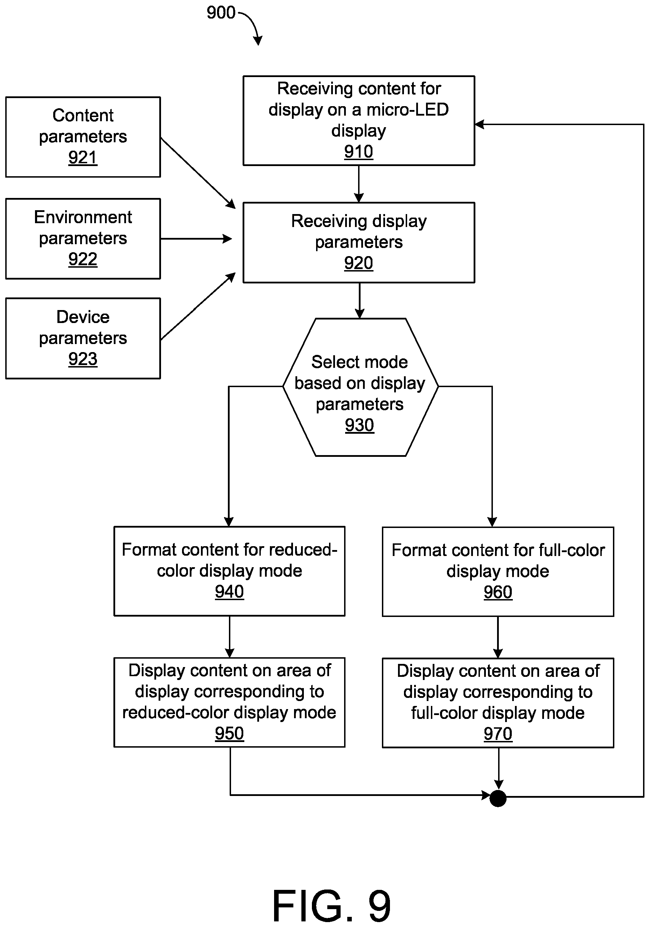

FIG. 9 is a flow chart of a method for displaying content on a multimode micro-LED display according to a possible implementation of the present disclosure. The method 900 includes receiving 910 content for display on a micro-LED display. The method 900 further includes receiving 920 display parameters. For example, the display parameters may include a condition of the head-mounted device and the condition of the head-mounted device may be measured/detected by a sensor of the head-mounted device. The received display parameters may include content parameters 921 corresponding to the content (e.g., resolution, color, frame rate, etc.) for display. The received display parameters may include environment parameters 922 (e.g., lighting, brightness, etc.). The received display parameter may include device parameters 923 (e.g., temperature, battery level, etc.). After the display parameters are received the method 900 includes selecting 930 a mode of the micro-LED display from a plurality of possible modes based on one or more of the display parameters.

After the mode is selected the method 900 may format the content for display according to the mode and display the content on an area of the micro-LED display based on the selected mode, where displaying the content may include driving the micro-LED display in an area corresponding to the selected mode. For example, in a first mode, the method 900 may include formatting 940 the content according to a reduced-color mode and displaying 950 the content on a first area of the display corresponding to the reduced-color mode. Further, in a second mode, the method 900 may include formatting 960 the content according to a full-color mode and displaying 970 the content on a second area of the display corresponding to the full-color mode.

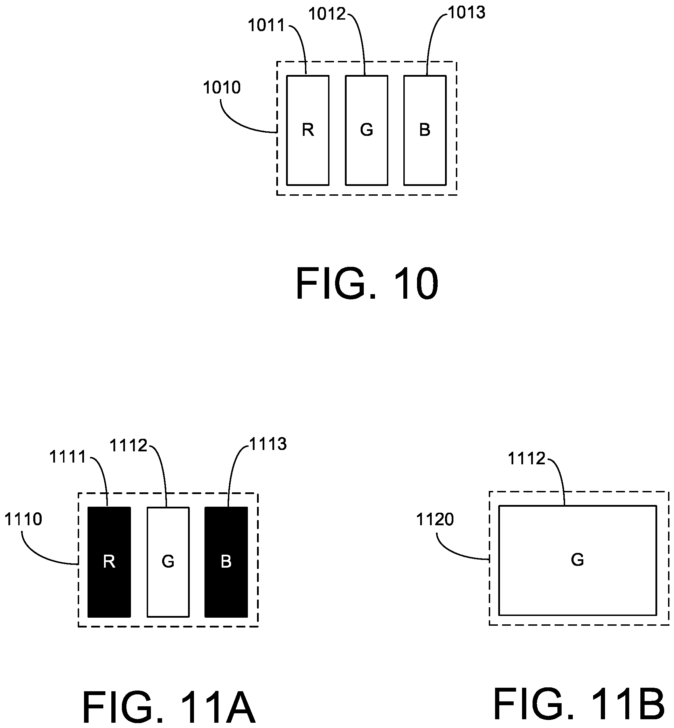

FIG. 10 illustrates a top view of a pixel for displaying content in full-color according to a possible implementation of the present disclosure. As shown, a pixel for displaying content in full color (i.e., full-color pixel 1010) can include a red subpixel 1011, a green subpixel 1012, and a blue subpixel 1013. The subpixels are each driven to emit light (shown as unshaded) to collectively generate a color in the full color spectrum.

FIGS. 11A-11B illustrate a top view of possible pixels for displaying content one-color (green) according to a possible implementation of the present disclosure. As shown in FIG. 11A , a pixel for displaying content in green (i.e., reduced-color pixel 1110) can be implemented by configuring (i.e., driving) the green subpixel 1112 to emit light (shown as unshaded), while configuring the red subpixel 1111 and blue subpixel 1113 to not emit light (shown as shaded).

As shown in FIG. 11B , a pixel for displaying content in green (i.e., a reduced-color pixel 1120) can also be implemented by including only a green subpixel 1122. As shown, an area of the reduced-color pixel 1120 including one subpixel may be made equal to the area of the full-color pixel 1010 including multiple subpixels so that the intensity of the light emitted by the reduced-color pixel 1120 (i.e., brightness) may be increased. The reduced-color pixel 1110 shown in FIG. 11A and the reduced-color pixel 1120 in FIG. 11B may be each be referred to as a green pixel. Each subpixel of a pixel can be a micro-LED.

In the specification and/or figures, typical embodiments have been disclosed. The present disclosure is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

Unless defined otherwise, all technical and scientific terms used herein have the same meaning as commonly understood by one of ordinary skill in the art. Methods and materials similar or equivalent to those described herein can be used in the practice or testing of the present disclosure. As used in the specification, and in the appended claims, the singular forms "a," "an," "the" include plural referents unless the context clearly dictates otherwise. The term "comprising" and variations thereof as used herein is used synonymously with the term "including" and variations thereof and are open, non-limiting terms. The terms "optional" or "optionally" used herein mean that the subsequently described feature, event or circumstance may or may not occur, and that the description includes instances where said feature, event or circumstance occurs and instances where it does not. Ranges may be expressed herein as from "about" one particular value, and/or to "about" another particular value. When such a range is expressed, an aspect includes from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint.

Some implementations may be implemented using various semiconductor processing and/or packaging techniques. Some implementations may be implemented using various types of semiconductor processing techniques associated with semiconductor substrates including, but not limited to, for example, Silicon (Si), Gallium Arsenide (GaAs), Gallium Nitride (GaN), Silicon Carbide (SiC) and/or so forth.

While certain features of the described implementations have been illustrated as described herein, many modifications, substitutions, changes and equivalents will now occur to those skilled in the art. It is, therefore, to be understood that the appended claims are intended to cover all such modifications and changes as fall within the scope of the implementations. It should be understood that they have been presented by way of example only, not limitation, and various changes in form and details may be made. Any portion of the apparatus and/or methods described herein may be combined in any combination, except mutually exclusive combinations. The implementations described herein can include various combinations and/or subcombinations of the functions, components and/or features of the different implementations described.

It will be understood that, in the foregoing description, when an element is referred to as being on, connected to, electrically connected to, coupled to, or electrically coupled to another element, it may be directly on, connected or coupled to the other element, or one or more intervening elements may be present. In contrast, when an element is referred to as being directly on, directly connected to or directly coupled to another element, there are no intervening elements present. Although the terms directly on, directly connected to, or directly coupled to may not be used throughout the detailed description, elements that are shown as being directly on, directly connected or directly coupled can be referred to as such. The claims of the application, if any, may be amended to recite exemplary relationships described in the specification or shown in the figures.

As used in this specification, a singular form may, unless definitely indicating a particular case in terms of the context, include a plural form. Spatially relative terms (e.g., over, above, upper, under, beneath, below, lower, and so forth) are intended to encompass different orientations of the device in use or operation in addition to the orientation depicted in the figures. In some implementations, the relative terms above and below can, respectively, include vertically above and vertically below. In some implementations, the term adjacent can include laterally adjacent to or horizontally adjacent to.

## Claims

1. A micro-LED display for a head-mounted device, the micro-LED display comprising:
a two-dimensional array of pixels subdivided into a plurality of areas, the plurality of areas configured to display content according to at least one mode of the micro-LED display; and
a controller configured to:
determine a mode of the at least one mode of the micro-LED display based on a criterion;
select an area of the plurality of areas to display the content based on the mode; and
display the content on the area of the plurality of areas.

2. The micro-LED display according to claim 1, wherein the content includes a first content for display in a first mode and a second content for display in a second mode, and the controller is configured to:
display the first content in a first area corresponding to the first mode and the second content in a second area corresponding to the second mode, the first content and the second content displayed simultaneously on the micro-LED display.

3. The micro-LED display according to claim 1 or 2, wherein the plurality of areas includes:
a first area configured to display the content in full-color, the full-color in a first wavelength range of 400 nanometers to 700 nanometers; and
a second area configured to display the content in green, the green within a second wavelength range of 500 nanometers to 570 nanometers.

4. The micro-LED display according to claim 3, wherein
(a)
the first area is at a center of the two-dimensional array of pixels; and
has a resolution that is greater than other areas of the plurality of areas;
and/or
(b)
the plurality of areas further includes:
a third area configured to display the content in yellow, the yellow in a third wavelength range of 570 nanometers to 580 nanometers; and
a fourth area configured to display the content in a cyan, the cyan in a fourth wavelength range of 490 nanometers to 520 nanometers.

5. The micro-LED display according to claim 4, wherein:
the first area includes full-color pixels including red subpixels, green subpixels, and blue subpixels;
the second area includes reduced-color pixels including green subpixels;
the third area includes reduced-color pixels including red subpixels and green subpixels; and
the fourth area includes reduced-color pixels including green subpixels and blue subpixels.

6. The micro-LED display according to any one of the preceding claims, wherein the criterion includes at least one of:
a power level of a battery of the head-mounted device being below a threshold,
an ambient light level being above a threshold,
a temperature of the head-mounted device, and
a color content of a frame for display.

7. A head-mounted device comprising:
a sensor configured to sense a condition of the head-mounted device;
a micro-LED display subdivided into contiguous areas, the contiguous areas including:
a first area at a center of the micro-LED display, the first area having an upper border that is above the center, a lower border below that is below the center, a left border that is left of the center, and a right border that is right of the center, wherein the first area includes three different color subpixels; and
a reduced-color area extending from the upper border to a top edge of the micro-LED display, extending from the lower border to a bottom edge of the micro-LED display, extending from the right border to a right edge of the micro-LED display, and extending from the left border to a left edge of the micro-LED display, wherein the reduced-color area includes less than three different color subpixels; and
a processor communicatively coupled to the sensor and the micro-LED display, the processor configured by software instructions to:
select a mode from a plurality of modes of the micro-LED display based on the condition of the head-mounted device; and
configure the micro-LED display to display content in the first area and the reduced-color area based on the mode.

8. The head-mounted device according to claim 7, wherein:
the first area includes red subpixels, blue subpixels, and green subpixels; and
the reduced-color area includes only green subpixels.

9. The head-mounted device according to claim 8, wherein the plurality of modes includes:
a full-color mode configured to drive the red subpixels, the blue subpixels, and the green subpixels of the first area so that the content is displayed in full-color in the first area; and
a green-color mode configured to drive only the green subpixels of the first area and drive green subpixels of the reduced-color area so that the content is displayed in green in the first area and in the reduced-color area.

10. The head-mounted device according to claim 9, wherein:
(a)
the content is displayed at a higher resolution in the full-color mode; and
the content is displayed in a lower resolution in the green-color mode;
and/or
(b)
the green-color mode is selected based on a battery level of the head-mounted device in order to reduce power consumed by the micro-LED display;
and/or
(c)
the green-color mode is selected based on an ambient light level in order to increase a visibility of content displayed by the micro-LED display.

11. The head-mounted device according to any one of claims 7 to 10, wherein:
the first area includes red subpixels, blue subpixels, and green subpixels; and
the reduced-color area includes:
a second area extending vertically from the lower border to the upper border and extending horizontally from the left edge of the micro-LED display to the left border of the first area, wherein the second area includes only red subpixels and green subpixels;
a third area extending vertically from the lower border to the upper border and extending horizontally from the right border of the first area to the right edge of the micro-LED display, wherein the third area includes only green subpixels and blue subpixels;
a fourth area extending vertically from the upper border to the top edge of the micro-LED display and extending horizontally from the left edge of the micro-LED display to the right edge of the micro-LED display, wherein the fourth area includes only green subpixels; and
a fifth area extending vertically from the bottom edge of the micro-LED display to the lower border and extending horizontally from the left edge of the micro-LED display to the right edge of the micro-LED display, wherein the fifth area includes only green subpixels.

12. The head-mounted device according to claim 11, wherein the plurality of modes includes:
a full-color mode configured to drive the red subpixels, the blue subpixels, and the green subpixels of the first area so that the content is displayed in color in the first area;
a yellow-color mode configured to drive the red subpixels and the blue subpixels of the first area and drive the red subpixels and blue subpixels of the second area so that the content is displayed in yellow in the first area and the second area; and
a cyan-color mode configured to drive the blue subpixels and the green subpixels of the first area and drive the blue subpixels and green subpixels of the third area so that the content is displayed in cyan in the first area and third area.

13. The head-mounted device according to claim 12,
wherein
(a)
the plurality of modes further includes:
a green-color mode configured to drive the green subpixels of the fourth area and to drive the green subpixels of the fifth area so that the content is displayed in green in the fourth area and/or the fifth area;
and/or wherein the content is displayed at a resolution in the fourth area different from a resolution in the fifth area;
and/or
(b)
the head-mounted device further comprises
a diffractive waveguide combiner configured to convey light from the micro-LED display to an eye of a user, the diffractive waveguide combiner includes:
a first grating configured to convey white light transmitted by the first area in the full-color mode;
a second grating configured to convey yellow light transmitted by the first area and second area in the yellow-color mode; and
a third grating configured to convey cyan light transmitted by the first area and the third area in the cyan-color mode.

14. A method comprising:
receiving content for display on a micro-LED display;
selecting a mode of the micro-LED display from a plurality of modes based on the content; and
driving different areas of the micro-LED display differently based on the mode, the different areas including:
a first area at a center of the micro-LED display that includes three different color subpixels spaced at a first pixel pitch; and
a second area surrounding the first area that includes less than three different color subpixels spaced at a second pixel pitch, the second pixel pitch larger than the first pixel pitch.

15. The method according to claim 14, further comprising:
(a)
determining that the content includes text content; and
selecting a monochromatic mode for the text content, the monochromatic mode configured to drive pixels of a first color in the first area and to drive pixels of the first color in the second area so that the text content can be displayed in the first color anywhere in the first area and in the second area;
and/or
(b)
determining that the content includes image content; and
selecting a full-color mode for the image content, the full-color mode configured to drive red subpixels, blue subpixels, and green subpixels in the first area so that the image content is displayed in full-color in the first area.
